# EUROPÄISCHE PATENTSCHRIFT

(11) **EP 2 547 019 B1**
(45) Veröffentlichungstag und Bekanntmachung des Hinweises auf die Patenterteilung: **25.12.2019**
(21) Anmeldenummer: 12005153.7
(22) Anmeldetag: 12.07.2012
(51) Int. Cl.: H04J 14/02, H04L 27/26

(54) **Verfahren zum Festlegen von Verbindungsparametern und optisches OFDM-moduliertes WDM-Übertragungsnetz**
Method for defining connection parameters and optical OFDM-modulated WDM transmission network
Procédé de détermination de paramètres de connexion et réseau de transmission WDM à modulation OFDM optique

(30) Priorität: 12.07.2011 DE 102011107138
(43) Veröffentlichungstag der Anmeldung: 16.01.2013
(73) Patentinhaber: Deutsche Telekom AG, 53113 Bonn (DE)
(72) Erfinder: Gunkel, Matthias, Dr.-Ing., 64291 Darmstadt (DE); Leppla, Ralph Dr., 64404 Bickenbach (DE); Mühlender, Uwe, 53227 Bonn (DE)
(74) Vertreter: Blumbach · Zinngrebe Patentanwälte PartG mbB

(56) Entgegenhaltungen:
- EP-A1- 2 312 770
- US-A1- 2008 107 429
- CHRISTODOULOPOULOS K ET AL: "Elastic Bandwidth Allocation in Flexible OFDM-Based Optical Networks", JOURNAL OF LIGHTWAVE TECHNOLOGY, IEEE SERVICE CENTER, NEW YORK, NY, US, Bd. 29, Nr. 9, 1. Mai 2011 (2011-05-01), Seiten 1354-1366, XP011353989, ISSN: 0733-8724, DOI: 10.1109/JLT.2011.2125777
- CHRISTODOULOPOULOS K ET AL: "Dynamic bandwidth allocation in flexible OFDM-based networks", 2011 OPTICAL FIBER COMMUNICATION CONFERENCE AND EXPOSITION AND THE NATIONAL FIBER OPTIC ENGINEERS CONFERENCE (OFC/NFOEC 2011) : LOS ANGELES, CALIFORNIA, USA, 6 - 10 MARCH 2011, IEEE, PISCATAWAY, NJ, USA, 6. März 2011 (2011-03-06), Seiten 1-3, XP031946531, ISBN: 978-1-4577-0213-6

## Beschreibung

Die Erfindung betrifft allgemein die Datenübertragung mittels optischer Signale, und insbesondere ein im Wellenlängen-Multiplexbetrieb betriebenes optisches Übertragungsnetz, sowie ein Verfahren zum Festlegen von Verbindungsparametern einer Kommunikationsverbindung zwischen zwei Netzknoten eines solchen optischen Übertragungsnetzes.

Viele Kommunikationsnetze basieren heute auf optischer Signalübertragung, wobei zur besseren Ausnutzung der Bandbreite von Glasfasern Wellenlängenmultiplex (WDM; Wavelength Division Multiplexing) eingesetzt wird. Bei Wellenlängenmultiplex wird Licht von Lasern unterschiedlicher Wellenlänge mittels eines optischen Multiplexers zusammengeführt, über eine gemeinsame optische Faser geleitet und empfangsseitig mittels eines optischen Demultiplexers wieder getrennt.

Das orthogonale Frequenzmultiplexverfahren (Orthogonal Frequency Division Multiplex, OFDM) wird unter anderem im Mobilfunk und bei DSL im Zugangsnetz schon seit Jahren als Modulationsformat verwendet. OFDM basiert auf einer Vielzahl von Subträgern, die zueinander phasenstarr gekoppelt und orthogonal sind. Seit Kurzem wird OFDM auch als Modulationsformat in der optischen Übertragungstechnik eingesetzt und dann als O-OFDM (Optical-OFDM) bezeichnet.

Optische WDM-Übertragungssysteme umfassen in der Regel ein Übertragungsnetz mit einer Mehrzahl von Netzknoten, welche optisch leitend miteinander verbunden sind. Benachbarte Netzknoten sind dabei typischerweise physikalisch mittels eines Lichtwellenleiters (LWL) miteinander verbunden. Zur optischen Signalübertragung zwischen Netzknoten bzw. zwischen jeweils mit einem Netzknoten verbundenen Teilnehmeranschlüssen wird ein optischer Verbindungspfad aufgebaut, der eine Mehrzahl von Netzknoten umfassen kann.

Zur Signalübertragung wird ein Übertragungskanal festgelegt, wobei in bekannten optischen WDM-Systemen ein einzelner Kanal einer Zentral-Wellenlänge mit einem fest zugeordneten Wellenlängenfenster entsprechend dem sogenannten ITU-T Grid, beispielsweise beschrieben in ITU-T G.694.1, zugewiesen ist. Diese Zuordnung kann bei der Bereitstellung bzw. Provisionierung einer Verbindung unter Beachtung der verfügbaren Ressourcen auf der Glasfaser flexibel vorgenommen werden. So ist die Zentral-Wellenlänge eines optischen Senders durch verschiedene technische Einrichtungen abstimmbar. Damit kann ein einziges optisches Sendemodul für verschiedene Wellenlängenfenster verwendet werden. Die spektrale Lage des Wellenlängenfensters selbst und dementsprechend auch die Zentral-Wellenlänge des optischen Senders sind während des Betriebs jedoch starr.

In einem optisch transparenten WDM-Netz, auch als All Optical Network (AON) bezeichnet, welches ausschließlich auf optischen Komponenten basiert, werden die Wellenlängen zum Routen durch das Netz verwendet, wobei das Ziel das vollständige Ende-zu-Ende Führen eines Bedarfs in der optischen Ebene ist. Dies vermeidet die Wandlung zwischen optischen und elektrischen Signalen, wodurch eine erhebliche Einsparung an Schnittstellen-Baugruppen und damit Kosten erzielt wird.

Insbesondere in ausgedehnten und vermaschten optisch transparenten WDM-Netzen treten in nachteiliger Weise Blockierungseffekte auf, da das einem Verbindungspfad zugeordnete Wellenlängenfenster in allen Streckensegmenten des Verbindungspfades frei sein muss und diese Streckensegmente somit für andere Verbindungen mit gleichem Wellenlängenfenster blockiert sind.

Um Blockierungen auf der Wellenlängenebene in einem ausgedehnten, vermaschten optischen Netz zu vermeiden, wurden spezielle Verfahren zum Routing & Wavelength Assignment (RWA) entwickelt, wie beispielsweise in den folgenden Fachartikeln beschrieben:
- X. Chu, B. Li: "Dynamic Routing and Wavelength - Assignment in the Presence of Wavelength Conversion for All-Optical Networks", IEEE Transactions on Networking, Vol.13, June 2005
- H. Zang, J. Jue, B. Mukherjee: "A Review of Routing and Wavelength Assignment Approaches for Wavelength-Routed Optical WDM Networks", Optical Networks Magazine, January 2000
- S. Azodolmolky, M. Klinkowski, E. Marin, D. Careglio, J. Sole Pareta, I. Tomkos: "A Survey on Physical Layer Impairments Aware Routing and Wavelength Assignment Algorithms in Optical Networks", Computer Network journal, Volume 53, Issue 7, Pages 926-944, May 2009
- S. Azodolmolky, D. Klonidis, I. Tomkos, Y. Ye, C. Saradhi, E. Salvadori, M. Gunkel, K. Manousakis: "A Dynamic Impairment Aware Networking Solution for Transparent Mesh Optical Networks", IEEE Communication Magazine, 2009
- S. Azodolmolky, M. Klinkowski, E. Marin, D. Careglio, J. Sole-Pareta, I. Tomkos: "A Survey on Physical Layer Impairments Aware Routing and Wavelength Assignment Algorithms in Optical Networks", Computer Networks - Elsevier, ISSN: 1389-1286, 2009
- S. Azodolmolky, J. Prello, M. Angelou, F. Agraz, L. Velasco, S. Spadaro, Y. Pointurier, A.Francescon, C. Saradhi, P. Kokkinos, E. Varvarigos, S. Al Zahr, M. Gagnaire, M. Gunkel, D. Klonidis, I. Tomkos: "Experimental Demonstration of an Impairment Aware Network Planning and Operation Tool for Transparent/Translucent Optical Networks", IEEE Journal of Lightwave Technology, 2010.

Das technische Problem des RWA ist sehr komplex und wird üblicherweise mit Methoden des Linear Programming (LP) oder mit angepassten Heuristiken gelöst. Generell ist es nicht in jedem Fall möglich, alle Netzressourcen in Form von Wellenlängen vollständig zu nutzen. Diese Fälle treten insbesondere dann auf, wenn die räumliche Verteilung der tatsächlichen Verkehrsbedarfe nicht der prognostizierten Verkehrsverteilung und -menge folgt. Es kommt dann notwendigerweise zu regionalen und lokalen Über- und Unterversorgungen von verfügbaren Netzkapazitäten. In abgemilderter Form muss dieser Zustand sogar als normaler Betriebsfall betrachtet werden.

Verkehrsbedarfe treten in einem Netzbetrieb zeitlich unterschiedlich und scheinbar zufällig auf. Selbst wenn man planerisch eine ideale Kapazitätsauslegung unterstellt, kommt es daher durch die zeitliche Reihenfolge des Eintreffens der Bedarfe zu Kapazitätsengpässen. In der Praxis sind auch bei numerisch optimalen RWA-Verfahren nur zwischen 50 und 80% aller Wellenlängenkanäle belegt, sobald es zu den ersten Wellenlängenblockierungen auf aufeinanderfolgenden Streckenabschnitten kommt.

Wellenlängenkonverter würden prinzipiell das Problem der Wellenlängenblockierungen lösen. Kostengünstige Wellenlängenkonverter sind hierfür jedoch nicht in Sicht, so dass der Einsatz von Wellenlängenkonvertern in jedem Netzknoten mit erheblichen Kosten verbunden ist.

Ein Netzkonzept, in welchem einige wenige OEO-Konversionen erlaubt werden und in dem daher die Forderung nach vollständig optisch transparenter Wegeführung nur noch abgeschwächt aufrechterhalten wird, wird als transluzenter Ansatz bezeichnet. Durch wenige gezielte OEO-Konversionen und die damit verbundene Option, die Trägerwellenlänge der zu transportierenden Information zu wechseln, kann die Gefahr von Wellenlängenblockierungen entschärft werden. An diesem Ansatz ist nachteilig, dass zusätzliche Kosten für die entsprechenden Linecards (Transponder, Regeneratoren o.ä.) anfallen.

Als Schaltelement zum Routen werden in einem optisch transparenten WDM-Netz rekonfigurierbare optische Add/Drop Multiplexer (ROADM) eingesetzt. Ein ROADM mit mehr als zwei angeschlossenen Glasfaserpaaren wird als Multi-degree-ROADM (MD-ROADM) bezeichnet, wobei MD-ROADMs üblicherweise mit Wellenlängen-Selektiven Schaltern (WSS) ausgestattet sind, die intern das eigentliche Schalten der Wellenlängenkanäle durchführen.

Durch den Standard ITU-T G.694.1 wird ein festes Wellenlängenraster vorgegeben, wobei die Rasterbreite insbesondere 100 GHz, 50 GHz oder 25 GHz beträgt. Angepasst an diesen Standard haben heutige WSS typischerweise ein festes Wellenlängen-Raster, wobei sie kommerziell entweder im 100 GHz oder 50 GHz Raster vorliegen. Da bei diesen WSS-Typen zwischen den einzelnen Kanälen immer spektrale Bereiche mit einer hohen Dämpfung auftreten, können z.B. WSS mit 50 GHz Raster nicht zum Schalten eines spektral breiteren Signals verwendet werden, das z.B. einen 100 GHz breiten Kanal belegt.

Es sind aber auch WSS ohne starr vorgegebenes Wellenlängen-Raster bekannt, die beispielsweise auf der LCoS-Technologie (Liquid Crystal on Silicon) oder DLP-Technologie (Digital Light Processing) basieren und deren spektrales Schaltfenster in einem weiten Rahmen elektronisch konfigurierbar sind. LCoS-basierte WSS-Module ermöglichen das Verschmelzen benachbarter Wellenlängenfenster im Rahmen eines festen Kanalrasters zu einem breiteren Wellenlängenfenster. Der Einsatz von LCoS-basierten WSS-Modulen löst daher das Problem von spektral fest vorgegebenen Bereichen mit hoher Einfügedämpfung. So könnten zum Beispiel zwei benachbarte Wellenlängenfenster eines 50 GHz-Rasters zu einem 100 GHz breiten Wellenlängenfenster oder zwei benachbarte Wellenlängenfenster eines 100 GHz-Rasters zu einem 200 GHz breiten Wellenlängenfenster zusammengefasst werden.

Trotz dieser technischen Entwicklungen treten in einem optisch transparenten WDM-Netz ohne Wellenlängenkonverter bei Einsatz heutiger, auf festen Kanalrastern basierenden RWA-Algorithmen aufgrund von Wellenlängenblockierungen ungenutzte spektrale Lücken im Übertragungsband der verwendeten Glasfasern und somit ungenutzte Transportkapazitäten auf.

Flexible opstiche Netwerke und Systeme sind in den folgenden Dokumenten offerbart: CHRISTODOULOPOULOS K ET AL: "Elastic Bandwidth Allocation in Flexible OFDM-Based Optical Networks", JOURNAL OF LIGHTWAVE TECHNOLOGY, IEEE SERVICE CENTER, NEW YORK, NY, US, Bd. 29, Nr. 9, 1. Mai 2011 (2011-05-01), Seiten 1354-1366, ISSN: 0733-8724, DOI: 10.1109/JLT.2011.2125777; CHRISTODOULOPOULOS K ET AL: "Dynamic bandwidth allocation in flexible OFDM-based networks", 2011 OPTICAL FIBER COMMUNICATION CONFERENCE AND EXPOSITION AND THE NATIONAL FIBER OPTIC ENGINEERS CONFERENCE (OFC/NFOEC 2011) : LOS ANGELES, CALIFORNIA, USA, 6 - 10 MARCH 2011, IEEE, PISCATAWAY, NJ, USA, 6. März 2011 (2011-03-06), Seiten 1-3, ISBN: 978-1-4577-0213-6; und EP 2 312 770 A1.

Es ist daher die Aufgabe der vorliegenden Erfindung, einen Weg aufzuzeigen, wie diese spektralen Lücken vermieden und somit die Transportkapazität eines optisch transparenten WDM-Netzes erhöht werden kann. Eine weitere Aufgabe der vorliegenden Erfindung besteht darin, einen Weg aufzuzeigen, wie Wellenlängenblockierungen in einem optisch transparenten WDM-Netz reduziert werden können, insbesondere in einem ausgedehnten und vermaschten optisch transparenten WDM-Netz.

Diese Aufgabe wird durch die Merkmale der unabhängigen Ansprüche gelöst. Vorteilhafte Ausführungsformen sind Gegenstand der abhängigen Ansprüche.

Ein erfindungsgemäßes Verfahren dient dem Festlegen von Verbindungsparametern einer ersten Kommunikationsverbindung zwischen einem ersten und einem zweiten Netzknoten eines im Wellenlängen-Multiplexbetrieb betriebenen optischen Übertragungsnetzes, wobei das Übertragungsnetz eine Mehrzahl von Netzknoten umfasst, welche mittels optischer Übertragungsstrecken miteinander verbunden sind. Das Verfahren sieht das Vorgeben einer Datenrate für eine Datenübertragung über die erste Kommunikationsverbindung zwischen dem ersten und dem zweiten Netzknoten vor, wobei die Verbindungsparameter in Abhängigkeit der vorgegebenen Datenrate festgelegt werden. Zu diesem Zweck wird ein der ersten Kommunikationsverbindung zugeordneter erster optischer Verbindungspfad für die Datenübertragung zwischen dem ersten und dem zweiten Netzknoten ausgewählt, wobei der ausgewählte erste optische Verbindungspfad den ersten und zweiten Netzknoten optisch transparent miteinander verbindet. Ferner wird zu diesem Zweck ein erster Übertragungskanal zur Signalübertragung entlang des ersten optischen Verbindungspfads mittels eines gemäß einem OFDM-Modulationsschema modulierten optischen Mehrträgersignals definiert. Das Auswählen des ersten optischen Verbindungspfades und das Definieren des ersten Übertragungskanals erfolgt in Abhängigkeit der vorgegebenen Datenrate und in Abhängigkeit der Verbindungsparameter der zwischen den Netzknoten des Übertragungsnetzes bestehenden weiteren Kommunikationsverbindungen, wobei das Übertragungsspektrum des ersten Übertragungskanals flexibel an die vorgegebene Datenrate angepasst wird.

Ein Grundgedanke der Erfindung besteht darin, in einem WDM-basierten transparenten optischen Übertragungssystem durch Anpassen des Sendespektrums, welches einem aufzubauenden optischen Verbindungspfad zugewiesen wird, das Auftreten von Wellenlängenblockierungen zu reduzieren. Dementsprechend erfolgt das Anpassen des Übertragungsspektrums des ersten Übertragungskanals in Antwort auf das Erkennen einer Blockierung.

Das für die Signalübertragung zu verwendende Übertragungsspektrum wird senderseitig festgelegt und entspricht dem jeweils durch den optischen Sender erzeugten Sendespektrum. Das Übertragungsspektrum entspricht dem für die Signalübertragung genutzten Wellenlängenbereich.

Die Verbindungsparameter umfassen den Verbindungspfad und den Übertragungskanal, welcher die Parameter der Signalübertragung festlegt, wobei diese das für die Datenübertragung eingesetzte Übertragungsspektrum sowie die verwendete Signalmodulation umfassen.

Das zum Erzeugen eines modulierten optischen Mehrträgersignals eingesetzte OFDM-Modulationsschema basiert auf einer Vielzahl von Subträgern, die zueinander phasenstarr gekoppelt und orthogonal sind. Die mit der vorgegebenen Datenrate zu übertragende Nutzinformation wird beim eingesetzten OFDM-Modulationsschema auf mehrere Teildatenströme aufgeteilt und diese Teildatenströme werden jeweils mit geringer Bandbreite mit einem Modulationsverfahren wie beispielsweise der Quadraturamplitudenmodulation auf die einzelnen Subträger moduliert. O-OFDM Sendesignale werden üblicherweise mit digitalen Signalprozessoren und schnellen D/A- und A/D-Wandlern erzeugt. Mit diesem Ansatz lassen sich sehr scharfe Flankensteilheiten im Spektrum erzielen. Durch Variation der Parameter bei der Signalprozessierung ergibt sich die Möglichkeit, ein O-OFDM-Signal flexibel dem Kanalspektrum anzupassen. Indem die Modulationstiefe einzelner Subträger elektronisch verändert wird, kann entweder das Datenvolumen pro Zeiteinheit angepasst werden oder die spektrale Breite des Sendesignals variiert werden. Die Modulationstiefe gibt die Anzahl der pro Symbol zu übertragenden Bits des jeweiligen Subträgers an.

Abhängig von der Geschwindigkeit der eingesetzten D/A- und A/D-Wandler kann es für hohe Datenraten vorteilhaft sein, dass das modulierte optische Mehrträgersignal eine Mehrzahl von zu einem Multiplexsignal zusammengefassten optischen Einzelsignalen umfasst, wobei jedes der optischen Einzelsignale jeweils gemäß einem OFDM-Modulationsschema moduliert ist.

Bei Einsatz dieses zusätzlichen Frequenzmultiplex wird die Breite des Übertragungsspektrums durch die spektrale Breite des Multiplexsignal definiert. Das Multiplexsignal kann auch vorteilhaft mittels eines OBM-OFDM Modulationsschemas erzeugt werden, wie es beispielsweise in EP 2 271 013 A2 beschrieben ist.

Die spektrale Breite des Übertragungsspektrums des ersten Übertragungskanals wird somit vorzugsweise durch Anpassen der Modulationstiefe der Subträger des zur Signalübertragung eingesetzten modulierten optischen Mehrträgersignals flexibel an die vorgegebene Datenrate angepasst, wobei diese Subträger im Fall des oben beschriebenen zusätzlichen optischen Frequenzmultiplex die Subträger aller optischen Einzelsignale des Multiplexsignals umfassen. Das Verfahren verwendet somit statt eines festen Wellenlängen-Kanalrasters ein flexibles Raster, wobei jeder Kanal individuell an die jeweils zugeordnete Datenrate angepasst ist, wodurch eine effizientere Nutzung der verfügbare Bandbreite einer optischen Faser zwischen zwei Netzknoten ermöglicht wird.

Das Festlegen der Verbindungsparameter der ersten Kommunikationsverbindung kann vorteilhaft bei Aufbau der Kommunikationsverbindung zwischen dem ersten und dem zweiten Netzknoten erfolgen, wobei das Vorgeben der Datenrate vorzugsweise das Anfordern der Datenrate an einem Clientport umfasst. Der Clientport ist mit einem Netzknoten des Übertragungsnetzes verbunden.

Das Festlegen der Verbindungsparameter der ersten Kommunikationsverbindung kann aber auch bei bereits bestehender ersten Kommunikationsverbindung erfolgen, wenn beispielsweise die der ersten Kommunikationsverbindung zugeordnete Datenrate oder die Verbindungsparameter der weiteren Kommunikationsverbindungen angepasst werden.

Ein Grundgedanke der Erfindung besteht darin, in einem WDM-basierten transparenten optischen Übertragungssystem durch Anpassen des Sendespektrums, welches einem aufzubauenden optischen Verbindungspfad zugewiesen wird, das Auftreten von Wellenlängenblockierungen zu reduzieren, wobei zu diesem Zweck vorteilhaft nicht nur das Sendespektrum des aufzubauenden Verbindungspfads, sondern auch das von Nachbarkanälen angepasst wird.

Dementsprechend umfasst das Verfahren vorzugsweise das Ändern der Verbindungsparameter wenigstens einer zweiten Kommunikationsverbindung zwischen zwei Netzknoten des optischen Übertragungsnetzes, wobei der zweiten Kommunikationsverbindung ein zweiter optischer Verbindungspfad zugeordnet ist, welcher wenigstens eine gemeinsame optische Übertragungsstrecke mit dem ersten optischen Verbindungspfad aufweist, und wobei das Ändern der Verbindungsparameter der zweiten Kommunikationsverbindung ein Anpassen eines zweiten Übertragungskanals zur Signalübertragung entlang des zweiten optischen Verbindungspfads umfasst.

Besonders bevorzugt erfolgt das Anpassen des Übertragungsspektrums des ersten und/oder des zweiten Übertragungskanals in Antwort auf das Erkennen einer Blockierung.

In einer bevorzugten Ausführungsform des Verfahrens umfasst das Anpassen des zweiten Übertragungskanals ein Anpassen der Breite des Übertragungsspektrums des zweiten Übertragungskanals und/oder ein Verschieben des Übertragungsspektrums des zweiten Übertragungskanals. Das Verschieben des Übertragungsspektrums des zweiten Übertragungskanals umfasst typischerweise ein Verschieben der Mittenfrequenz eines über den zweiten Übertragungskanal übertragbaren modulierten optischen Mehrträgersignals. Auf diese Weise kann eine bestehende spektrale Lücke, deren Breite zunächst nicht ausreicht, um das Übertragungsspektrum des ersten Übertragungskanals aufzunehmen, auf die Breite des Übertragungsspektrums des ersten Übertragungskanals vergrößert werden, so dass eine ansonsten auftretende Wellenlängenblockierung vermieden werden kann. Jede Nutzung der spektralen Lücken zur Erweiterung der Transportkapazität erhöht die Rentabilität der bereits getätigten Investitionen in Transportsysteme.

In einer weiteren bevorzugten Ausführungsform werden auch Überlappungen von Übertragungsspektren zugelassen, wobei diese Ausführungsform sowohl alternativ als auch in Kombination mit der oben beschriebenen Ausführungsform, welche ein Anpassen der Breite und/oder ein Verschieben des Übertragungsspektrums vorsieht, eingesetzt werden kann. Dementsprechend wird vorteilhaft der erste Übertragungskanal derart definiert und/oder der zweite Übertragungskanal derart angepasst, dass die Übertragungsspektren des ersten und zweiten Übertragungskanals zumindest teilweise überlappen. Bevorzugt umfasst der Überlappungsbereich einen Teil des Übertragungsspektrums des ersten Übertragungskanals und einen Teil des Übertragungsspektrums des zweiten Übertragungskanals. Überlappungen im optischen Spektrum können jedoch nicht durch vergleichsweise einfache spektrale Filterung in der optischen Domäne rückgängig gemacht oder kompensiert werden.

Daher wird zur empfängerseitigen Signaltrennung im Überlappungsbereich der Übertragungsspektren des ersten und zweiten Übertragungskanals vorteilhaft ein Codemultiplexverfahren eingesetzt, welches die gleichzeitige Übertragung verschiedener Nutzdatenströme auf einem gemeinsamen Frequenzbereich durch die Verwendung von Spreizcodes ermöglicht.

Alternativ oder zusätzlich zu der Verwendung eines Codemultiplexverfahrens im Überlappungsbereich wird vorteilhaft der erste Übertragungskanal derart definiert und/oder der zweite Übertragungskanal derart angepasst, dass Subträgern eines über den jeweiligen Übertragungskanal übertragbaren modulierten optischen Mehrträgersignals, welche im Überlappungsbereich liegen, eine geringere Modulationstiefe, d.h. eine niedrigere Anzahl pro Symbol zu übertragender Bits, zugeordnet wird als Subträgern, welche außerhalb des Überlappungsbereichs liegen.

Besonders bevorzugt umfasst die Signalübertragung der ersten und/oder zweiten Kommunikationsverbindung ein Routen mittels eines rekonfigurierbaren optischen Add/Drop-Multiplexers (ROADM), welcher wenigstens einen spektral flexibel konfigurierbaren Wellenlängen-selektiven Schalter (WSS) aufweist. Mit spektral flexibel konfigurierbaren WSS lassen sich entsprechend spektral sehr flexible ROADM aufbauen. Insbesondere können Wellenlängenbereiche sehr feingranular an jeden beliebigen Port bzw. Ausgang eines ROADM-Netzelementes geschaltet werden. Ein spektral flexibel konfigurierbarer WSS kann beispielsweise auf der LCoS-Technologie basieren. Alternativ zur LCoS-Technologie können auch DLP-basierte WSS verwendet werden (DLP = Digital Light Processing), die auf einer Vielzahl von MEMS-Spiegeln basieren und annähernd vergleichbare Performance bieten.

Das Verfahren sieht besonders vorteilhaft das Ausführen eines RWA-Algorithmus vor, welcher an eine flexible datenratenabhängige Zuweisung von Übertragungsspektren angepasst ist. Aufgrund der unterschiedlichen Anpassungsmöglichkeiten des Übertragungsspektrums benachbarter Übertragungskanäle kann ein Zuweisungsschema sehr unterschiedlich ausgebildet sein. Unabhängig vom konkreten Zuweisungsschema werden aufgrund der erhöhten Flexibilität der spektralen Ausnutzung Blockierungen reduziert.

Die Aufgabe der Erfindung wird ferner durch ein optisches, im Wellenlängen-Multiplexbetrieb betriebenes Datenübertragungsnetz mit einer Mehrzahl von mittels optischer Übertragungsstrecken miteinander verbundener Netzknoten gelöst, welches wenigstens eine Auswahleinrichtung zum Auswählen eines optischen Verbindungspfades, welcher einen ersten und einen zweiten Netzknoten optisch transparent miteinander verbindet, und eines zugeordneten ersten Übertragungskanals zur Signalübertragung entlang des ausgewählten optischen Verbindungspfads mittels eines gemäß einem OFDM-Modulationsschema modulierten optischen Mehrträgersignals aufweist, wobei das Datenübertragungsnetz dazu ausgebildet ist, das modulierte optische Mehrträgersignal entlang des ausgewählten optischen Verbindungspfades durch das Netz zu leiten, und wobei die Auswahleinrichtung dazu ausgebildet ist, das Auswählen des optischen Verbindungspfades und des zugeordneten Übertragungskanals in Abhängigkeit einer vorgegebenen Datenrate und in Abhängigkeit der Verbindungsparameter von zwischen den Netzknoten des Datenübertragungsnetzes bestehenden Kommunikationsverbindungen durchzuführen, wobei in Antwort auf das Erkennen einer Blockierung das Übertragungsspektrum des zugeordneten Übertragungskanals flexibel an die vorgegebene Datenrate angepasst wird.

Vorteilhaft kann die Auswahlvorrichtung in einer zentralen Vorrichtung des Datenübertragungsnetzes angeordnet sein. Alternativ kann auch jeder Netzknoten eine entsprechende Auswahlvorrichtung umfassen. Ferner kann die Auswahleinrichtung durch in einer Mehrzahl von Netzknoten angeordneten, zusammenwirkender Modulen gebildet sein.

Besonders vorteilhaft umfasst das optische Datenübertragungsnetz wenigstens ein Sendemodul mit einem Sendelaser zur Erzeugung eines gemäß einem OFDM-Modulationsschema modulierten optischen Mehrträgersignals zur optischen Signalübertragung über einen einer Kommunikationsverbindung zugeordneten Übertragungskanals, wobei die Wellenlänge des Sendelasers bei bestehender Kommunikationsverbindung variierbar ist. Auf diese Wiese kann die Mittenfrequenz und damit das entsprechende Übertragungsspektrums spektral verschoben werden.

Ferner umfasst vorzugsweise wenigstens ein Netzknoten des optischen Datenübertragungsnetzes noch ein optisches Schaltelement, welches als spektral flexibler rekonfigurierbarer optischer Add/Drop-Multiplexer ausgebildet ist und wenigstens einen spektral flexibel konfigurierbaren Wellenlängen-selektiven Schalter umfasst, wobei als spektral flexibel konfigurierbare WSS beispielsweise LCoS-basierte oder DLP-basierte WSS eingesetzt werden.

Vorteilhaft ist das optische Datenübertragungsnetz zum Ausführen eines an eine flexible datenratenabhängige Zuweisung von Übertragungsspektren angepassten RWA-Algorithmus ausgebildet.

Durch die Kombination von O-OFDM-basierten Sende- und Empfängereinrichtungen und LCoS-basierten oder DLPbasierten ROADMs in einem optisch transparenten Netz werden prinzipiell flexible Kanalbelegungen in einem optisch transparenten Transportnetz möglich, da beide Technologien elektronisch konfigurierbar sind und eine hohe spektrale Flexibilität aufweisen. Die bisherige Notwendigkeit eines starren WDM-Kanalrasters kann dadurch vorteilhaft entfallen.

Im Rahmen eines transparenten Netzkonzepts ("all-optical networking") wird durch die Erfindung die technisch maximal mögliche Transportkapazität erzielt. Hierzu werden O-OFDM-modulierte Sendespektren in einem WDM-Transportsystem geeignet beeinflusst. Dabei wird das bekannte feste Wellenlängen-Kanalraster zugunsten eines flexiblen Rasters aufgehoben. Besonders vorteilhaft werden bei dem erfindungsgemäßen Netzkonzept die flexibel zugewiesenen Sendespektren mit Hilfe von WSSbasierten MD-ROADM optisch transparent durch das Netz geroutet.

Es wird ferner vorteilhaft nur der tatsächlich anfallende Verkehr, d.h. die tatsächliche Nutzlast, durch das Netz transportiert. Mit üblicherweise elektrisch erzeugten Subträgern eignet sich O-OFDM hierfür hervorragend, da Subträger am Rand des O-OFDM Spektrums einfach zu Null gesetzt werden können, sobald der Verkehrsbedarf es erlaubt, d.h. entsprechend gering geworden ist. Ein flexibles Bandbreiten- und Wellenlängenzuweisungsschema kann einzelne Kanäle optisch überlappen lassen, die durch einen CDMA-Ansatz und/oder durch eine spektral begrenzte Reduktion der Modulationstiefe zur Erreichung einer höheren Robustheit gegen Nachbarkanalstörungen elektrisch wieder getrennt werden können. Alternativ kann die aktuell zu transportierende Information so auf die zentraleren O-OFDM-Subträger verteilt werden und diese entsprechend tiefer moduliert werden, dass spektrale Überlappungen vermieden werden. Weiterhin können die Zentral-Wellenlängen der verwendeten Laser verschoben werden. Zusammen mit spektral flexibel konfigurierbaren WSS können auch die derart an den aktuellen Netzzustand und seine Verkehrslast optimierten Sendespektren flexibel durch ein optisch transparentes Netz geroutet werden.

Im Unterschied zu "Auto-Fallback"-Varianten im Funk-LAN-Bereich wird bei der vorliegenden Erfindung immer die gesamte zu transportierende Datenmenge durch das flexible, optisch transparente Netz geschickt. Eine Reduktion der Nutzdatenrate findet typischerweise nicht statt.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile. Es zeigen:
- Fig. 1: eine schematische Darstellung eines Spektrums bei Einzelträgermodulation,
- Fig. 2: eine schematische Darstellung eines Spektrums bei OFDM-Mehr trägermodulation,
- Fig. 3: eine schematische Darstellung einer beispielhaften Bandbreitenzuordnung bei Einsatz des erfindungsgemäßen Verfahrens,
- Fig. 4: schematisch einen ersten erfindungsgemäßen Ansatz zur Vermeidung von Wellenlängenblockierungen,
- Fig. 5: schematisch ein bevorzugtes Ausführungsbeispiel eines erfindungsgemäßen optischen Übertragungsnetzes,
- Fig. 5a: beispielhaft die spektrale Belegung der in Fig. 5 dargestellten optischen Übertragungsstrecke 401,
- Fig. 5b: beispielhaft die spektrale Belegung der in Fig. 5 dargestellten optischen Übertragungsstrecke 402,
- Fig. 5c: beispielhaft die spektrale Belegung der in Fig. 5 dargestellten optischen Übertragungsstrecke 403,
- Fig. 5d: beispielhaft die spektrale Belegung der in Fig. 5 dargestellten optischen Übertragungsstrecke 404, und
- Fig. 6: schematisch einen zweiten erfindungsgemäßen Ansatz zur Vermeidung von Wellenlängenblockierungen.

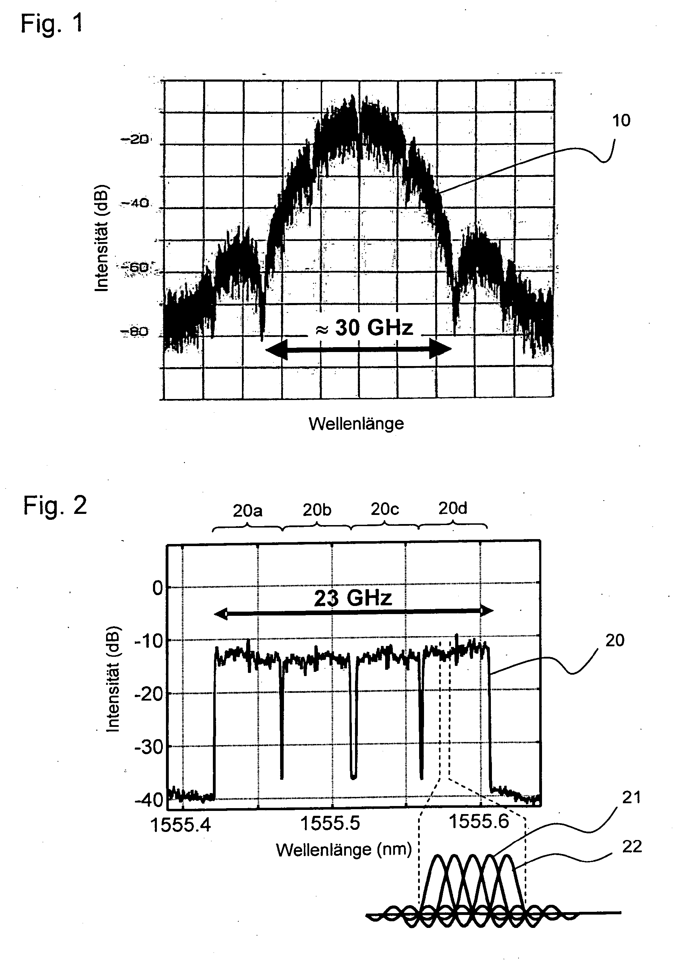

In Fig. 1 ist beispielhaft das Spektrum 10 eines Sendesignals bei einer Einzelträgermodulation dargestellt. Im Vergleich dazu zeigt Fig. 2 das Spektrum 20 eines Sendesignals bei OFDM-Mehrträgermodulation. Durch Verwendung einer Mehrzahl von Subträgern, beispielhaft mit den Bezugszeichen 21 und 22 bezeichnet, wird bei Einsatz von OFDM ein quasi rechteckförmiges und schmaleres Spektrum erreicht, wobei die Datenrate bei dem Sendesignal in Fig. 1 und bei dem Sendesignal in Fig. 2 im dargestellten Beispiel 100 Gbit/s beträgt. Im dargestellten Beispiel ist das OFDM-Mehrträgersignal 20 in Fig. 2 ein Multiplexsignal, welches vier optische Signale 20a, 20b, 20c und 20d umfasst, welche jeweils einzeln OFDM-moduliert und mittels Frequenzmultiplex zu einem Signal zusammengefasst sind.

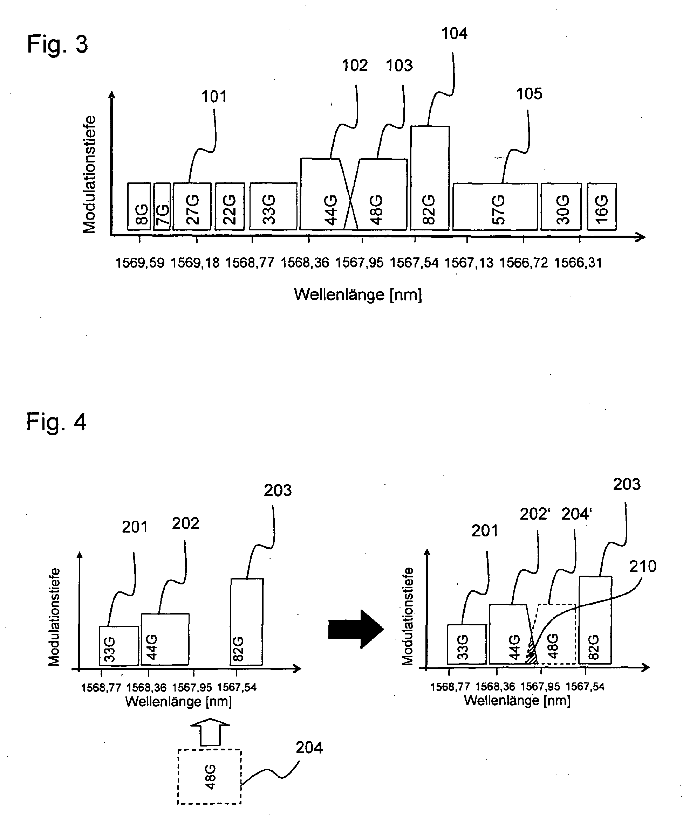

Die digitale Signalverarbeitung in einem O-OFDM Sender-/Empfängerpärchen erlaubt aus Sicht eines Client-Ports "atmende" Transportkapazitäten des jeweiligen Kanals, d.h. durch Verändern der Modulationstiefe einzelner Subträger kann das Datenvolumen pro Zeiteinheit angepasst werden oder die spektrale Breite des Sendesignal variiert werden. Die Übertragungskapazität eines Transponders bzw. einer Punkt-zu-Punkt Verbindung kann damit an das aktuell anfallende Datenvolumen angepasst werden, wie schematisch in Fig. 3 dargestellt. Unter aktuell anfallendem Datenvolumen ist typischerweise ein zeitlicher Mittelwert, beispielsweise über einige Sekunden oder wenige Minuten, gemeint.

Fig. 3 zeigt ein Beispiel einer Bandbreitenzuordnung ohne Berücksichtigung eines starr vorgegebenen Kanalrasters. Es ist für beispielhafte Kanäle die Modulationstiefe in Abhängigkeit der Wellenlänge dargestellt, wobei die Kanäle, beispielhaft mit den Bezugszeichen 101 bis 105 bezeichnet, schematisch als Blöcke dargestellt sind, in welche jeweils die zugeordnete Datengeschwindigkeit bzw. Datenrate in Gbit/s eingeschrieben ist. Diese Werte beziehen sich auf den tatsächlichen Verkehrsbedarf und nicht auf eine standardisierte Datenrate. Eine hohe Datenrate kann durch eine hohe Modulationstiefe wie beispielsweise bei Kanal 104 oder durch eine große spektrale Breite wie beispielsweise bei Kanal 105 erzielt werden. Da die Modulationstiefe die Anzahl der pro Symbol zu übertragenden Bits eines Subträgers angibt und die Anzahl der Subträger von der Breite des Übertragungsspektrums abhängt, ist die Fläche der dargestellten Blöcke ein Maß für die zugeordnete Datenrate. Es ist anzumerken, dass eine höhere Modulationstiefe eine höhere Störanfälligkeit und somit eine geringere Reichweite zur Folge hat und somit nach oben begrenzt ist. Wie Fig. 3 ferner zu entnehmen ist, können sich einige Kanäle wie die Kanäle 102 und 103 sogar geringfügig spektral überlappen. Im dargestellten Beispiel wird die Modulationstiefe der Subträger im Überlappungsbereich adaptiv angepasst, wobei die Modulationstiefe jeweils zum Rand des Übertragungsspektrums der Kanäle 102 und 103 reduziert wird. Der einfacheren Darstellung halber ist die Reduzierung der Modulationstiefe schematisch als kontinuierliche Flanke am Rand des den jeweiligen Übertragungskanal repräsentierenden Blocks dargestellt. Bei korrekter Darstellung würde die Flanke diskrete Stufen aufweisen, da jedem einzelnen Subträger eine Modulationsart und damit ein diskreter Wert der Modulationstiefe zugeordnet ist.

Durch das Anpassen der Kanäle, an das tatsächlich anfallende Datenvolumen kann die verfügbare Bandbreite einer Glasfaser zwischen zwei Knoten effektiver genutzt werden, weil die spektrale Belegung der knappen Ressource Bandbreite bei kurzfristigem Nichtvorhandensein entsprechend großer Datenmengen nicht unnötig belegt wird. Die freie Kapazität kann für einen anderen Verkehrsbedarf, der den gleichen Netzabschnitt nutzt, verwendet werden. Es kommt zu einem dem Layer2-Multiplexen nicht unähnlichen statistischen Multiplex-Gewinn. Der Gesamtdurchsatz an Nutzinformation im Netz kann erhöht werden.

Bezogen auf eine Punkt-zu-Punkt-Strecke ist der Vorteil angepasster Kanäle unmittelbar einsichtig. Für ein optisch transparentes Netz mit vermaschten Netzstrukturen stellen atmende Kanalkapazitäten aber eine Herausforderung dar, da spektral variable Belegungen auf einer Strecke nicht notwendigerweise mit den spektralen Lücken auf einer anderen Strecke übereinstimmen, in die das Signal ausgehend von einem weiteren MD-ROADM geschaltet werden soll. Es kommt zu spektralen Blockierungen. Ohne feste WellenlängenKanäle werden die benötigten RWA-Verfahren ohne weitere Maßnahmen nochmals komplexer.

Eine erste solche Maßnahme besteht darin, dass sich optische Signale in verschiedenen Faserabschnitten spektral überlappen dürfen. Diese Überlappungen sind zunächst nachteilig, da Überlappungen im optischen Spektrum nicht durch vergleichsweise einfache spektrale Filterung in der optischen Domäne rückgängig gemacht oder kompensiert werden können. Es können jedoch andere Mittel zur Kompensation herangezogen werden, so dass mit besonderem Vorteil die Idee der Möglichkeit zu teil-überlappenden Kanälen die Wahrscheinlichkeit einer Wellenlängenblockierung auf der jeweiligen Strecke bzw. im optisch transparenten Netz verringert.

Es wird davon ausgegangen, dass die spektrale Störung - und nichts anderes stellt ein benachbarter Kanal (i+1 oder i-1) für einen betrachteten Kanal i dar - elektrisch entzerrt werden kann. Zu diesem Zweck machen sich die Erfinder die Flexibilität der digitalen Signalverarbeitung bei O-OFDM zu Nutze. Wenn nun ein Nachbarkanal in das Spektrum des betrachteten Kanals i seine Störleistung "hineinatmet", reduziert Kanal i seinen Datendurchsatz in diesem spektralen Bereich und verlagert ihn in einen bisher noch nicht gestörten Teilbereich. Der Störbereich wird trotzdem voll weitergenutzt, wenn auch mit reduziertem Datendurchsatz.

Dies ist beispielhaft in Fig. 4 dargestellt. In der auf der linken Seite dargestellten ursprünglichen spektralen Leistungsverteilung der Kanäle 201, 202 und 203 liegt keine hinreichende Lücke für den zusätzlichen, gestrichelt dargestellten Kanal 204 vor. Durch spektrale Formung der Kanäle 202 und 204, hier durch Blöcke 202' und 204' angedeutet, zusammen mit einem CDMA-Ansatz im Bereich der weiterhin vorliegenden Überlappung 210 kann der erforderliche Datendurchsatz für beide Kanäle erzielt werden. Die Kanäle 201 und 203 bleiben ungeändert.

Für die Nutzung des Überlappungsbereiches können vorteilhaft ein CDMA-Ansatz oder ein Modulationstiefe-Ansatz eingesetzt werden. Beide Ansätze können einzeln oder kombiniert zur Anwendung kommen.

CDMA-Ansatz: Weil die Störleistung in der gleichen Größenordnung oder sogar größer als die Nutzleistung - immer aus Sicht des Kanals i - sein kann, kann vorteilhaft ein Code Division Multiple Access (CDMA) Verfahren zur Störkompensation eingesetzt werden. Vorzugsweise wird dabei nur der gestörte Anteil der Subträger mittels eines CDMA-Verfahrens robust gegen Störungen gemacht, um den gesamten Datendurchsatz weiterhin möglichst hoch zu halten.

Modulationstiefe-Ansatz: In O-OFDM-Sendern wird die digitale Signalverarbeitung umkonfiguriert und damit die Modulationstiefe der einzelnen Subträger adaptiv angepasst. Beispielsweise kann eine Reduktion der Modulationstiefe im Überlappungsbereich realisiert werden, zum Beispiel von einer 64-QAM auf eine 16-QAM, QPSK oder sogar eine 2-ASK gegangen werden. Soll der gesamte Datendurchsatz konstant gehalten werden, müssen die Daten dann auf andere Subträger verteilt werden. Dort wird die Modulationstiefe dann entsprechend erhöht, wie in Fig. 4 für die angepassten Kanäle 202' du 204' gezeigt.

Selbstverständlich kann auch durch die Verwendung von CDMA der theoretisch durch die Shannon-Grenze vorgegebene maximal mögliche Datendurchsatz nicht überschritten werden. Spektral störende Überlappungen erfordern in jedem Fall eine Reduktion der Datenrate im Bereich der Überlappung und damit eine entsprechend verringerte Effizienz in diesem spektralen Bereich. Der wesentliche Vorteil der Erfindung wird dementsprechend auch nicht für eine einzelne Punkt-zu-Punkt Verbindung, sondern für ein vermaschtes, optisch transparentes Netz erzielt.

Dort liegt der Vorteil darin, dass der Datentransport auch dann noch möglich ist, wenn sich einzelne optisch "atmende" Kanäle in einigen wenigen Abschnitten, d.h. auf wenigen Netzkanten, überlappen. Es kommt folglich nicht zu einer binären Entscheidung "Transport durch das optisch transparente Netz geht" oder "Transport geht nicht". vielmehr wird die Datenrate geringfügig und adaptiv den verfügbaren Kanaleigenschaften angepasst und so eine möglichst gute Transporteffizienz insgesamt erzielt.

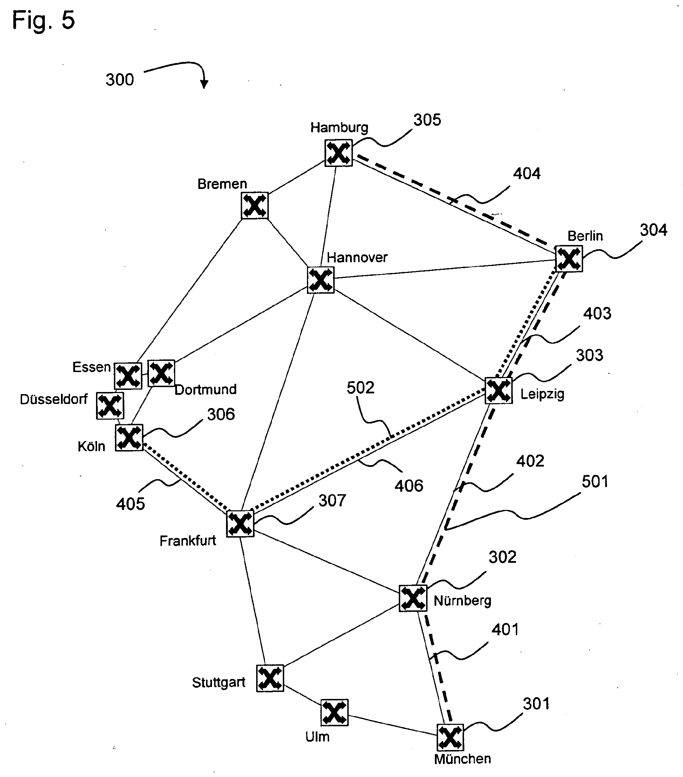

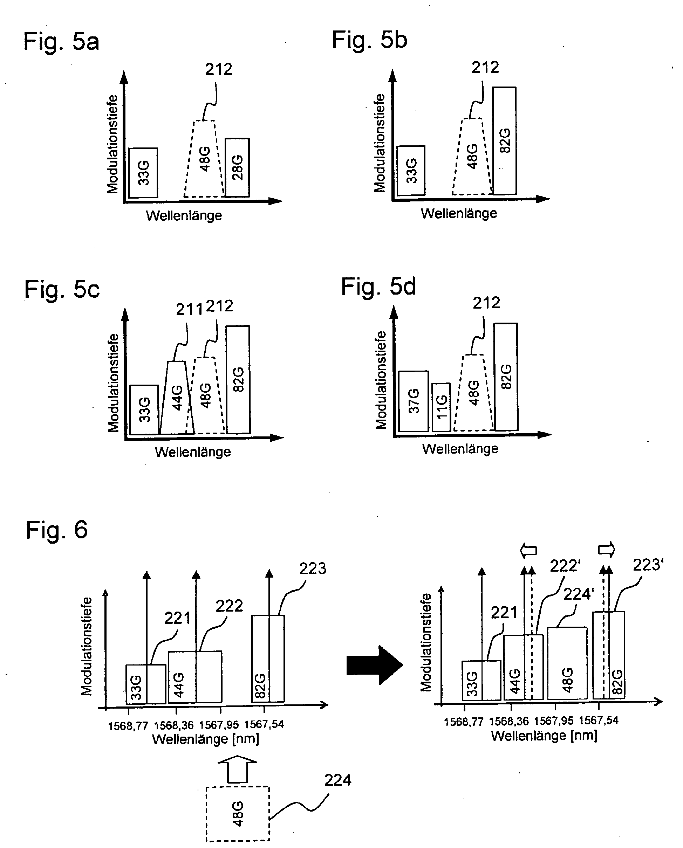

Fig. 5 zeigt ein bevorzugtes Ausführungsbeispiel eines erfindungsgemäßen optischen Übertragungsnetzes, welches als generisches Backbone-Netz 300 mit einer Mehrzahl Netzknoten ausgebildet ist. Die als MD-ROADM ausgebildeten und mit spektral flexibel konfigurierbaren Wellenlängen-selektiven Schaltern ausgerüsteten Netzknoten sind beispielhaft mit den Bezugszeichen 301 bis 307 bezeichnet und im dargestellten Ausführungsbeispiel in deutschen Großstädten angeordnet. Die Netzknoten sind mittels optischer Übertragungsstrecken miteinander verbunden, welche beispielhaft mit den Bezugszeichen 401 bis 406 bezeichnet sind.

Beispielhaft ist die spektrale Belegung der optischen Übertragungsstrecke 401 zwischen den Netzknoten 301 und 302 in Fig. 5a, die spektrale Belegung der optischen Übertragungsstrecke 402 zwischen den Netzknoten 302 und 303 in Fig. 5b, die spektrale Belegung der optischen Übertragungsstrecke 403 zwischen den Netzknoten 303 und 304 in Fig. 5c, und die spektrale Belegung der optischen Übertragungsstrecke 404 zwischen den Netzknoten 304 und 305 in Fig. 5d dargestellt.

Im dargestellten Ausführungsbeispiel wäre eine transparente Verbindung 501, in den Figuren 5a bis 5d als gestricheltes Datentrapez 212 mit aktuell 48Gbit/s Transportbedarf dargestellt, vom Netzknoten 301 in München zu dem Netzknoten 305 in Hamburg nicht möglich, da es auf dem Netzabschnitt 403 zwischen den Netzknoten 303 in Leipzig und 304 in Berlin im strengen Sinn zu Blockierungen käme. Mit dem erfindungsgemäßen Konzept der geringfügigen Überlappungen kann die vorhandene spektrale Lücke jedoch genutzt werden. Alternative Routen seien in diesem Beispiel bereits gefüllt. Zu diesem Zweck kann vorteilhaft eine Formung des Übertragungsspektrums des Kanals 211 wie oben beschrieben erfolgen, welcher beispielsweise einer bestehenden Kommunikationsverbindung 502 zwischen dem Netzknoten 306 in Köln und dem Netzknoten 304 in Berlin zugeordnet ist. Wie im dargestellten Beispiel für die spektral überlappenden Kanäle 211 und 212 vorgesehen, kann es vorteilhaft sein, an beiden Rändern des Übertragungsspektrums eine adaptive Anpassung der Modulationstiefe der Subträger vorzunehmen, auch wenn der jeweilige Kanal aktuell nur an einem Rand mit einem benachbarten Kanal überlappt. Auf diese Weise kann gegebenenfalls auf eine erneute Anpassung verzichtet werden, wenn eine spektrale Überlappung auch am anderen Rand erforderlich wird. Eine symmetrische Anpassung an beiden Rändern des Übertragungsspektrums hat zudem den Vorteil, dass die Kanalform, d.h. die Werte der Modulationstiefe der einzelnen Subträger des Kanals, mittels weniger Parameter beschreibbar ist. Dadurch kann vorteilhaft der erforderliche Kommunikationsaufwand zwischen den Netzknoten für die Ausführung eines RWA-Algorithmus, welcher an eine flexible datenratenabhängige Zuweisung von Übertragungsspektren angepasst ist, reduziert werden.

Eine Folge sowohl der Einführung von CDMA als auch der Reduktion der Modulationstiefe ist in jedem Fall eine Einbuße der maximal möglichen Reichweite der Übertragung. In einem realen Netz tritt der Fall, dass die tatsächliche Entfernung der maximalen Reichweitengrenze entspricht, üblicherweise sehr selten auf. In den meisten Fällen liegt noch eine hinreichende Systemreserve vor, so dass diese Empfindlichkeitsreserve flexibel zur Erhöhung der Robustheit gegen spektrale Störungen genutzt werden kann. In diesem Sinn können die beiden oben beschriebenen Ansätze auch so interpretiert werden, dass sie die Übertragung robust gegen Nachbarkanalübersprechen machen.

Kommt es auf einer Strecke oder gar in einem Netz gehäuft zu Teil-Überlappungen von Kanälen, stellt das wiederum ein Maß für die Notwendigkeit einer Strecken- bzw. Netzerweiterung dar. Das erfindungsgemäße Verfahren kann somit vorteilhaft als Triggerinstanz eingesetzt werden, mit der durch das Setzen geeigneter Schwellwerte ein Netzausbau gesteuert werden kann. Bei einer sinnvollen Dimensionierung kann das Netz zunächst mit geringfügigen Einschränkungen weiterbetrieben werden, ohne dass es zu ersten harten Blockierungen neuer Verkehre kommt.

Ein anderer Ansatz vermeidet die spektrale Überlappung, indem die Sendeleistung einzelner Subträger des gesendeten O-OFDM-Spektrums durch die digitale Signalverarbeitungseinheit bewusst auf Null gesetzt wird. Hierdurch passt sich das annähernd rechteckförmige OFDM-Spektrum des betrachteten neu zu provisionierenden Dienstes den Kanalbedingungen an. Soll der gesamte Datendurchsatz auch in diesem Fall konstant gehalten werden, stehen zwei Möglichkeiten zur Verfügung, die auch jederzeit kombiniert werden können. Die erste Möglichkeit besteht darin, die Daten auf andere Subträger zu verteilen, wobei dort die Modulationstiefe entsprechend erhöht wird. Die zweite Möglichkeit besteht darin, die Mittenfrequenz des Sendespektrums durch Verändern der Laserfrequenz so zu verschieben, dass die vorhandene spektrale Lücke optimal genutzt wird.

Dies ist in Fig. 6 beispielhaft dargestellt, wobei ein gestrichelt dargestellter Bedarfsträger 224 mit aktuell 48Gbit/s in eine spektrale Lücke integriert werden soll. Hierzu werden OFDM-Subträger am Rand des Spektrums zu Null gesetzt und die mittleren Subträger entsprechend tiefer moduliert. Damit wird das Sendespektrum schmaler, in Fig. 6 rechts mit Bezugszeichen 224' dargestellt. Weiterhin werden die seitlichen Nachbarkanäle 222 und 223 geringfügig spektral verschoben. Die verschobenen Nachbarkanäle sind in Fig. 6 rechts mit den Bezugszeichen 222' und 223' dargestellt, wobei das Sendespektrum des Kanals 222' gegenüber dem Kanal 222 zusätzlich zur spektralen Verschiebung zu einem schmaleren Sendespektrum durch Variation der Modulationstiefe der Subträger geformt wurde. Im Endergebnis kommt es zu einer überlappungsfreien Zuordnung der Kanäle im Transmissionsfenster der Glasfaser.

Die in den Figuren 4 und 6 schematisch dargestellten Ansätze zur Vermeidung von Wellenlängenblockierungen können alternativ oder in Kombination eingesetzt werden. Auch kann in einem Übertragungsnetz je nach Situation wahlweise der eine oder der andere Ansatz gewählt werden.

## Patentansprüche

1. Verfahren zum Festlegen von Verbindungsparametern einer ersten Kommunikationsverbindung zwischen einem ersten und einem zweiten Netzknoten eines im Wellenlängen-Multiplexbetrieb betriebenen optischen Übertragungsnetzes mit einer Mehrzahl von Netzknoten, welche mittels optischer Übertragungsstrecken miteinander verbunden sind, umfassend die Schritte:
- Vorgeben einer Datenrate für eine Datenübertragung zwischen dem ersten und dem zweiten Netzknoten,
- Auswählen eines der ersten Kommunikationsverbindung zugeordneten ersten optischen Verbindungspfades für die Datenübertragung zwischen dem ersten und dem zweiten Netzknoten, wobei der ausgewählte erste optische Verbindungspfad den ersten und zweiten Netzknoten optisch transparent miteinander verbindet,
- Definieren eines ersten Übertragungskanals zur Signalübertragung entlang des ersten optischen Verbindungspfads (300) mittels eines gemäß einem OFDM-Modulationsschema modulierten optischen Mehrträgersignals, wobei das Auswählen des ersten optischen Verbindungspfades und das Definieren des ersten Übertragungskanals in Abhängigkeit der vorgegebenen Datenrate und in Abhängigkeit der Verbindungsparameter der zwischen den Netzknoten des Übertragungsnetzes bestehenden weiteren Kommunikationsverbindungen erfolgt, wobei in Antwort auf das Erkennen einer Blockierung das Übertragungsspektrum des ersten Übertragungskanals flexibel an die vorgegebene Datenrate angepasst wird.

2. Verfahren nach Anspruch 1, wobei das Festlegen der Verbindungsparameter der ersten Kommunikationsverbindung bei Aufbau der Kommunikationsverbindung zwischen dem ersten und dem zweiten Netzknoten erfolgt.

3. Verfahren nach einem der vorstehenden Ansprüche, ferner umfassend den Schritt:
- Ändern der Verbindungsparameter wenigstens einer zweiten Kommunikationsverbindung zwischen zwei Netzknoten des optischen Übertragungsnetzes, wobei der zweiten Kommunikationsverbindung ein zweiter optischer Verbindungspfad zugeordnet ist, welcher wenigstens eine gemeinsame optische Übertragungsstrecke mit dem ersten optischen Verbindungspfad aufweist, und wobei das Ändern der Verbindungsparameter der zweiten Kommunikationsverbindung ein Anpassen eines zweiten Übertragungskanals zur Signalübertragung entlang des zweiten optischen Verbindungspfads umfasst.

4. Verfahren nach Anspruch 3, wobei das Anpassen des zweiten Übertragungskanals ein Anpassen der Breite des Übertragungsspektrums des zweiten Übertragungskanals und/oder ein Verschieben des Übertragungsspektrums des zweiten Übertragungskanals umfasst.

5. Verfahren nach einem der Ansprüche 3 oder 4, wobei der erste Übertragungskanal derart definiert und/oder der zweite Übertragungskanal derart angepasst wird, dass die Übertragungsspektren des ersten und zweiten Übertragungskanals zumindest teilweise überlappen.

6. Verfahren nach Anspruch 5, wobei zur empfängerseitigen Signaltrennung im Überlappungsbereich der Übertragungsspektren des ersten und zweiten Übertragungskanals ein Codemultiplexverfahren eingesetzt wird.

7. Verfahren nach Anspruch 5 oder 6, wobei der erste Übertragungskanal derart definiert und/oder der zweite Übertragungskanal derart angepasst wird, dass Subträgern eines über den jeweiligen Übertragungskanal übertragbaren modulierten optischen Mehrträgersignals, welche im Überlappungsbereich liegen, eine niedrigere Anzahl pro Symbol zu übertragender Bits zugeordnet werden als Subträgern, welche außerhalb des Überlappungsbereichs liegen.

8. Verfahren nach einem der vorstehenden Ansprüche, wobei die Signalübertragung der ersten und/oder zweiten Kommunikationsverbindung ein Routen mittels eines rekonfigurierbaren optischen Add/Drop-Multiplexers umfasst, welcher wenigstens einen spektral flexibel konfigurierbaren Wellenlängen-selektiven Schalter aufweist.

9. Verfahren nach einem der vorstehenden Ansprüche, wobei ein an eine flexible datenratenabhängige Zuweisung von Übertragungsspektren angepasster RWA-Algorithmus ausgeführt wird.

10. Optisches, im Wellenlängen-Multiplexbetrieb betriebenes Datenübertragungsnetz, umfassend
- eine Mehrzahl von Netzknoten, welche mittels optischer Übertragungsstrecken miteinander verbunden sind,
- wenigstens eine Auswahleinrichtung zum Auswählen eines optischen Verbindungspfades, welcher einen ersten und einen zweiten Netzknoten optisch transparent miteinander verbindet, und eines zugeordneten ersten Übertragungskanals zur Signalübertragung entlang des ausgewählten optischen Verbindungspfads mittels eines gemäß einem OFDM-Modulationsschema modulierten optischen Mehrträgersignals, wobei das Datenübertragungsnetz dazu ausgebildet ist, das modulierte optische Mehrträgersignal entlang des ausgewählten optischen Verbindungspfades durch das Netz zu leiten, und wobei die Auswahleinrichtung dazu ausgebildet ist, das Auswählen des optischen Verbindungspfades und des zugeordneten Übertragungskanals in Abhängigkeit einer vorgegebenen Datenrate und in Abhängigkeit der Verbindungsparameter von zwischen den Netzknoten des Datenübertragungsnetzes bestehenden Kommunikationsverbindungen durchzuführen, wobei in Antwort auf das Erkennen einer Blockierung das Übertragungsspektrum des zugeordneten Übertragungskanals flexibel an die vorgegebene Datenrate angepasst wird.

11. Optisches Datenübertragungsnetz nach Anspruch 10, wobei die Auswahlvorrichtung in einer zentralen Vorrichtung des Datenübertragungsnetzes angeordnet ist.

12. Optisches Datenübertragungsnetz nach Anspruch 10 oder 11, umfassend wenigstens ein Sendemodul mit einem Sendelaser zur Erzeugung eines gemäß einem OFDM-Modulationsschema modulierten optischen Mehrträgersignals zur optischen Signalübertragung über einen einer Kommunikationsverbindung zugeordneten Übertragungskanals, wobei die Wellenlänge des Sendelasers bei bestehender Kommunikationsverbindung variierbar ist.

13. Optisches Datenübertragungsnetz nach einem der Ansprüche 10 bis 12, wobei wenigstens ein Netzknoten ein optisches Schaltelement umfasst, welches als spektral flexibler rekonfigurierbarer optischer Add/Drop-Multiplexer ausgebildet ist und wenigstens einen spektral flexibel konfigurierbaren Wellenlängen-selektiven Schalter umfasst.

14. Optisches Datenübertragungsnetz nach einem der Ansprüche 10 bis 13, ausgebildet zum Ausführen eines an eine flexible datenratenabhängige Zuweisung von Übertragungsspektren angepassten RWA-Algorithmus.

## Claims

1. A method for defining connection parameters of a first communication connection between a first and a second network node of an optical transmission network operated in wavelength-division multiplexing, which comprises a plurality of network nodes that are interconnected by optical transmission links, comprising the steps of:
- predetermining a data rate for a data transfer between the first and the second network node;
- selecting one of the first optical connection paths associated with the first communication connection for the data transfer between the first and the second network node, wherein the selected first optical connection path connects the first and second network nodes in an optically transparent manner;
- defining a first transmission channel for signal transmission along the first optical connection path (300) using an optical multi-carrier signal modulated according to an OFDM modulation scheme, wherein the selecting of the first optical connection path and the defining of the first transmission channel are performed in dependence of the predetermined data rate and in dependence of the connection parameters of the further communication connections existing between the network nodes of the transmission network, wherein in response to the detection of a blockage, the transmission spectrum of the first transmission channel is flexibly adapted to the predetermined data rate.

2. The method according to claim 1, wherein the defining of the connection parameters of the first communication connection is performed upon establishing the communication connection between the first and second network nodes.

3. The method according to any one of the preceding claims, further comprising the step of:
- changing the connection parameters of at least one second communication connection between two network nodes of the optical transmission network, wherein the second communication connection has associated therewith a second optical connection path which includes at least one optical transmission path shared with the first optical connection path, and wherein the changing of the connection parameters of the second communication connection comprises adapting a second transmission channel for signal transmission along the second optical connection path.

4. The method according to claim 3, wherein the adapting of the second transmission channel comprises adapting the width of the transmission spectrum of the second transmission channel and/or shifting the transmission spectrum of the second transmission channel.

5. The method according to any one of claims 3 or 4, wherein the first transmission channel is defined such and/or the second transmission channel is adapted such that the transmission spectra of the first and second transmission channels overlap at least partially.

6. The method according to claim 5, wherein a code-division multiplexing technique is used for the receiver-side signal separation in the overlapping region of the transmission spectra of the first and second transmission channels.

7. The method according to claim 5 or 6, wherein the first transmission channel is defined such and/or the second transmission channel is adapted such that subcarriers of a modulated optical multi-carrier signal that can be transmitted via the respective transmission channel, which lie in the overlapping region, get allocated thereto a lower number of bits to be transmitted per symbol than subcarriers which lie outside the overlapping region.

8. The method according to any one of the preceding claims, wherein the signal transmission of the first and/or second communication connections comprises routing by means of a reconfigurable optical add/drop multiplexer which has at least one spectrally flexible, configurable wavelength-selective switch.

9. The method according to any one of the preceding claims, wherein an RWA algorithm is executed, which is adapted to a flexible data rate-dependent allocation of transmission spectra.

10. An optical data transmission network operated in wavelength-division multiplexing, comprising
- a plurality of network nodes that are interconnected by optical transmission links;
- at least one selection device for selecting an optical connection path that interconnects a first and a second network node in an optically transparent manner, and an associated first transmission channel for signal transmission along the selected optical connection path using an optical multi-carrier signal modulated according to an OFDM modulation scheme, wherein the data transmission network is adapted to convey the modulated optical multi-carrier signal through the network along the selected optical connection path;
and wherein the selection device is adapted to perform the selecting of the optical connection path and of the associated transmission channel in dependence of a predetermined data rate and in dependence of the connection parameters of communication connections existing between the network nodes of the data transmission network, wherein in response to the detection of a blockage, the transmission spectrum of the associated transmission channel is flexibly adapted to the predetermined data rate.

11. The optical data transmission network according to claim 10, wherein the selection device is arranged in a central device of the data transmission network.

12. The optical data transmission network according to claim 10 or 11, comprising at least one transmitter module with a transmitter laser for generating an optical multi-carrier signal that is modulated according to an OFDM modulation scheme for optical signal transmission via a transmission channel allocated to a communication connection, wherein the wavelength of the transmitter laser is variable while the communication connection is existing.

13. The optical data transmission network according to any one of claims 10 to 12, wherein at least one network node comprises an optical switching element which is implemented as a spectrally flexible reconfigurable optical add/drop multiplexer, and at least one spectrally flexible configurable wavelength-selective switch.

14. The optical data transmission network according to any one of claims 10 to 13, adapted for executing an RWA algorithm that is adapted to a flexible data rate-dependent allocation of transmission spectra.

## Revendications

1. Procédé de détermination de paramètres de liaison d'une première liaison de communication entre un premier et un deuxième nœuds de réseau d'un réseau de transmission optique fonctionnant par multiplexage de longueurs d'ondes, avec une pluralité de nœuds de réseau, qui sont reliés entre eux au moyen de trajets de transmission optiques, comprenant les étapes suivantes :
- prédétermination d'un débit de données pour une transmission de données entre les premier et deuxième nœuds de réseau,
- sélection d'un premier chemin de liaison optique correspondant à la première liaison de communication pour la transmission de données entre les premier et deuxième nœuds de réseau, le premier chemin de liaison optique sélectionné reliant les premier et deuxième nœuds de réseau de manière transparente optiquement,
- définition d'un premier canal de transmission pour la transmission de signaux le long du premier chemin de liaison optique (300) au moyen d'un signal multi-porteuse optique modulé selon un schéma de modulation OFDM, la sélection du premier chemin de liaison optique et la définition du premier canal de transmission ayant lieu en fonction du débit de données prédéterminé et en fonction des paramètres de liaison des autres liaisons de communication existant entre les nœuds de réseau du réseau de transmission, où, en réponse à la détection d'un blocage, le spectre de transmission du premier canal de transmission est adapté de manière flexible au débit de données prédéterminé.

2. Procédé selon la revendication 1, la détermination des paramètres de liaison de la première liaison de communication ayant lieu lors de l'établissement de la liaison de communication entre les premier et deuxième nœuds de réseau.

3. Procédé selon l'une des revendications précédentes, comprenant en outre l'étape suivante :
- modification des paramètres de liaison d'au moins une deuxième liaison de communication entre deux nœuds de réseau du réseau de transmission optique, où, à la deuxième liaison de communication, correspond un deuxième chemin de liaison optique, qui comprend au moins un trajet de transmission optique commun avec le premier chemin de liaison optique et où la modification des paramètres de liaison de la deuxième liaison de communication comprend une adaptation d'un deuxième canal de transmission à la transmission de signaux le long du deuxième chemin de liaison optique.

4. Procédé selon la revendication 3, l'adaptation du deuxième canal de transmission comprenant une adaptation de la largeur du spectre de transmission du deuxième canal de transmission et/ou un décalage du spectre de transmission du deuxième canal de transmission.

5. Procédé selon la revendication 3 ou 4, le premier canal de transmission étant défini et/ou le deuxième canal de transmission étant adapté de façon à ce que les spectres de transmission des premier et deuxième canaux de transmission se superposent au moins partiellement.

6. Procédé selon la revendication 5, où, pour la séparation des signaux côté récepteur dans la zone de superposition des spectres de transmission des premier et deuxième canaux de transmission, un procédé par multiplexage de code est utilisé.

7. Procédé selon la revendication 5 ou 6, le premier canal de transmission étant défini et/ou le deuxième canal de transmission étant adapté de façon à ce que à des sous-porteuses d'un signal multi-porteuse optique modulé par l'intermédiaire du canal de transmission correspondant, qui se trouvent dans la zone de superposition, correspondent un nombre plus faible par symbole de bits à transmettre qu'à des sous-porteuses qui se trouvent à l'extérieur de la zone de superposition.

8. Procédé selon l'une des revendications précédentes, la transmission de signaux de la première et/ou de la deuxième liaison de communication comprenant un routage au moyen d'un multiplexeur add/drop optique reconfigurable, qui comprend au moins un commutateur de sélection de longueurs d'ondes configurable spectralement de manière flexible.

9. Procédé selon l'une des revendications précédentes, un algorithme adapté à une attribution de spectres de transmission flexible en fonction du débit de données étant exécuté.

10. Réseau de transmission de données fonctionnant par multiplexage de longueurs d'ondes, comprenant :
- une pluralité de nœuds de réseau, qui sont reliés entre eux par l'intermédiaire de trajets de transmission optiques,
- au moins un dispositif de sélection pour la sélection d'un chemin de liaison optique, qui relie entre eux un premier et un deuxième nœuds de réseau de manière transparente optiquement, et d'un premier canal de transmission pour la transmission de signaux le long du chemin de liaison optique sélectionné au moyen d'un signal multi-porteuse optique modulé selon un schéma de modulation OFDM, le réseau de transmission de données étant conçu pour transmettre le signal multi-porteuse optique modulé le long du chemin de liaison optique sélectionné à travers le réseau et le dispositif de sélection étant conçu pour effecteur la sélection du chemin de liaison optique et du canal de transmission correspondant en fonction d'un débit de données prédéterminé et en fonction des paramètres de liaison de liaisons de communication existant entre les nœuds de réseau du réseau de transmission de données, où, en réponse à la détection d'un blocage, le spectre de transmission de canal de transmission correspondant est adapté de manière flexible au débit de données prédéterminé.

11. Réseau de transmission de données optique selon la revendication 10, le dispositif de sélection étant disposé dans un dispositif central du réseau de transmission de données.

12. Réseau de transmission de données optique selon la revendication 10 ou 11, comprenant au moins un module d'émission avec un laser d'émission pour la génération d'un signal multi-porteuse optique modulé selon un schéma de modulation OFDM, pour la transmission de signaux optiques par l'intermédiaire d'un canal de transmission correspondant à une liaison de communication, la longueur d'onde du laser d'émission pouvant varier pour une liaison de communication existante.

13. Réseau de transmission de données optique selon l'une des revendications 10 à 12, au moins un nœud de réseau comprenant un élément de commutation optique, qui est conçu comme un multiplexeur add/drop optique reconfigurable spectralement de manière flexible et au moins un commutateur de sélection de longueurs d'onde reconfigurable spectralement de manière flexible.

14. Réseau de transmission de données optique selon l'une des revendications 10 à 13, conçu pour l'exécution d'un algorithme RWA adapté à une attribution flexible en fonction du débit de données de spectres de transmission.
